# EUROPEAN PATENT APPLICATION

(11) **EP 2 747 007 A1**
(43) Date of publication of application: **25.06.2014**
(21) Application number: 12460094.1
(22) Date of filing: 24.12.2012
(51) Int. Cl.: G06Q 10/10

(54) **The method of determining power of receivers installed at recipients of electric energy**

(71) Applicant: Apator Rector Spólka z o.o., 65-021 Zielona Góra (PL)
(72) Inventor: Kiluk, Sebastian, 32-406 Zakliczyn 462 (PL); Duda, Jan Tadeusz,, 31-231 Krakow (PL)
(74) Representative: Kujanek, Wlodzimierz

(57) **Abstract**

The invention concerns the method of determining power of receivers installed at recipients of electric energy, in which cyclically in successive periods one measures the total energy consumed by receivers installed at particular recipients. According to the invention, in order to determine power consumed by particular receivers installed at every recipient, one uses information about the consumed power and about changes in the consumed power by.

## Description

The object of invention is a method of determining power of receivers installed at recipients of electric energy on the basis of measurements of electric energy consumed by particular recipients carried out in many successive equal, e.g. 10-minute, time intervals.

The patent description EP 2237212 A1 provides the method of determining the consumption of electric energy by measurements of energy consumed in successive periods, for example 15-minute ones, by many electric devices installed in households. For a longer time, every 15 minutes, one measures energy consumed in successive 15-minute periods and on this basis one can calculate the average power of installed receivers which have been turned on or off in this 15-minute period or have been on for this whole period. In order to determine consumptions of energy by particular groups of receivers, one uses electric energy meters transferring the results of energy measurements every 15 minutes by means of the Internet to the server, which forwards these results to a computer. From the whole series of calculated average powers one selects the minimum value which determines power for V1 receivers working in warm standby and permanently consuming energy. Differences in the average consumption of power consumed in five or ten periods occurring after the period in which the consumption of power is at the minimum level and the power consumed in the period of the minimum consumption of power mean the activation of one receiver or a group of receivers. An increase in the consumed power is power of the activated receiver. The difference in power determined on the basis of the average power consumed in five or ten periods in comparison with the power consumed in preceding five or ten periods means the activation or deactivation of the receiver of the power constituting the difference in the average powers in the compared periods.

The method presented in the patent description EP 2237212 A1 enables determination of power consumed only by four groups of receivers: V1 - receivers working in warm standby, V2 - receivers regularly turning on and off cyclically, e.g. fridge, freezer, V3 - receivers temporarily active with great power consumption, e.g. cooker, dishwasher, washing machine, V4 - other receivers. In order to detect a greater number of receivers installed at a recipient, the method presented in the patent description EP 2237212 A1 is not fit due to serious errors that are likely to be made.

There is no inconvenience as regards the method of determining power for receivers installed at recipients of electric energy, in which cyclically in successive periods one measures the total energy consumed by receivers installed at particular recipients. According to the invention, in order to determine power consumed by particular receivers installed at every recipient, one uses information about consumed power and about changes in consumed power by a particular recipient in two successive periods in which one notices a change in consumed power.

The invention enables suppliers of electric energy, on the basis of cyclically, in successive periods, measured total energy consumed by receivers installed at particular recipients, to determine power of these receivers with no need to provide this information by each recipient individually. This allows suppliers of electric energy to forecast demand for this energy taking into consideration time of day or night as well as season and it enables detection of illegal consumption of energy and defective operation of electric energy meters.

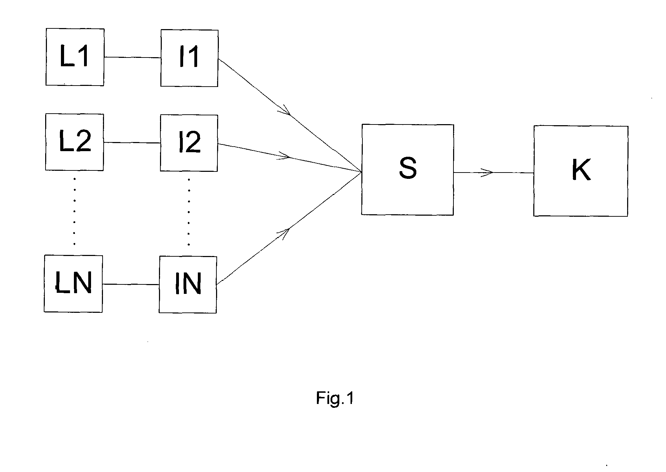

The invention has been explained on the basis of a drawing, designated as Fig.1, presenting a block diagram of the system enabling determination of power of receivers installed at recipients of electric energy.

In every household being a recipient of electric energy there is an electric energy meter installed corresponding to it **L1, L2,....LN.** Every meter **L1, I2,....LN** is equipped with interface corresponding to it I1, I2,...IN connected through wired network to the S server which collects the results of measurements from particular recipients and transfers them to **K** computer equipped with the appropriate calculation program. Instead of wired network one can use a wireless transfer of data from meters **L1, L2,...,LN** to the S server. Each of **L1, L2,....,LN** meters enables cyclic, e.g. every 10 minutes, transfer of information about energy consumed by a recipient. This means that one knows the value of energy in successive 10-minute periods. Knowing energy in particular periods after having divided the value of energy by the value of period one obtains the average power of substitute receiver consuming electric energy for this period. For a particular recipient one obtains a time series of the average power designated in sequence by P₁, P₂, P₃, P₄,...,P_{N}..

Next, one calculates a change in power in particular periods: in the first period ΔP₁ = P₂ - P₁, in the second period ΔP₂ = P₃ - P₂, and in the third period ΔP₃ = P₄ - P₃,..., in the N-1 period ΔP_{N-1} = P_{N} - P_{N-1}. From the time series of the average power one selects the power of the minimum value. In a special case, this may be power equal to zero, which means that in the stretch of time of the corresponding period no receiver was turned on. If the selected power of the minimum value has a value greater than zero, this means that at a recipient one or several receivers are turned on in a state described as standby. After having found a period or periods in which the minimum consumption of energy is noticed, one considers two successive periods in which a change in power consumption was noticed as compared to the minimum power. These may be periods occurring before the period in which the minimum of consumed power was noticed, which means activation of one or several receivers. These may also be periods occurring after the period in which the minimum of consumed power was notices, which means deactivation of one or several receivers. In order to determine power consumed by a receiver, one selects out of these two possible cases the one in which changes in power in two successive periods are smaller. The aggregate of changes in power in these two selected successive periods:
- in the event when the minimum value of the consumed power amounted to zero is power of a receiver having the smallest power of all the installed receivers at a recipient,
- in the event when the minimum value of the consumed power was different from zero is power of a receiver having the smallest power of all the remaining receivers installed at a recipient, apart from a receiver or a group of receivers being in a state described by the term of standby and whose power has been determined before on the basis of time series of the average power.

If the minimum value of the average power occurs in several periods, then one takes into consideration all these periods in which occur the minimum of consumed power and two another periods adjacent to each of these periods, preceding and following ones, and one selects these two successive periods in which occurs the minimum, not equaled to zero, change in power.

After having found, in the described way, power of a receiver and not taking into consideration periods in which the consumed power was at the minimum level and the period in which only the detected receiver is activated, one finds, in a similar way, a period in which occur the minimum of the consumed power and two periods adjacent to it, which means power of another in sequence in terms of the consumed power receiver at a recipient. Acting in the described way, one may, using time series of the average power, find power of particular receivers installed at each of the recipients.

The described way of acting is effective as regards periods in which one determines the average power consumed amounting to the time of several or dozen or so minutes.

## Claims

1. The method of determining power of receivers installed at recipients of electric energy, in which cyclically in successive periods one measures the total energy consumed by receivers installed at particular recipients, distinctive in reference to the fact that in order to determine the power consumed by particular receivers installed at every recipient, one uses information about the consumed power and about changes in the consumed power by particular recipients in two successive periods in which one notices a change in the consumed power.
